# FASCICULE DE BREVET EUROPEEN

(11) **EP 1 015 781 B1**
(45) Date de publication et mention de la délivrance du brevet: **16.10.2002**
(21) Numéro de dépôt: 98942716.6
(22) Date de dépôt: 10.08.1998
(51) Int. Cl.: F16D 3/28, B60G 7/00, B60G 3/06, B60G 15/06, B62D 7/16, F16F 1/40

(54) **MOYEN D'ARTICULATION ENTRE DEUX PIECES DE LIAISON ET VEHICULE AUTOMOBILE COMPORTANT UNE SUSPENSION DE ROUE EQUIPEE D' UN TEL MOYEN**
GELENKMITTEL ZWISCHEN ZWEI VERBINDUNGSTEILEN UND KRAFTFAHRZEUG MIT EINER DAMIT AUSGERÜSTETEN RADAUFHÄNGUNG
ARTICULATING MEANS BETWEEN TWO CONNECTING PARTS AND MOTOR VEHICLE WITH A WHEEL SUSPENSION EQUIPPED THEREWITH

(30) Priorité: 24.09.1997 FR 9711869
(43) Date de publication de la demande: 05.07.2000
(73) Titulaire: MICHELIN AVS, 78000 Versailles (FR)
(72) Inventeur: DE FONTENAY, Etienne, F-58300 Decize (FR); JEAN, Philippe, F-58260 La Machine (FR)
(74) Mandataire: Abello, Michel
(86) Numéro de dépôt international: FR9801780
(87) Numéro de publication internationale: WO99015802

(56) Documents cités:
- EP-A- 0 092 066
- EP-A- 0 265 059
- EP-A- 0 370 217
- EP-A- 0 548 989
- DE-A- 3 136 954
- DE-A- 3 233 878
- DE-A- 3 713 699
- DE-A- 4 242 815
- DE-B- 1 092 779
- FR-A- 1 043 387
- FR-A- 2 129 902
- FR-A- 2 568 329
- GB-A- 1 208 979
- US-A- 2 753 190
- US-A- 4 610 461
- PATENT ABSTRACTS OF JAPAN vol. 014, no. 049 (M-0927), 29 janvier 1990 & JP 01 278809 A (MAZDA MOTOR CORP), 9 novembre 1989
- PATENT ABSTRACTS OF JAPAN vol. 015, no. 117 (M-1095), 20 mars 1991 & JP 03 009118 A (NISSAN MOTOR CO LTD), 17 janvier 1991

## Description

L'invention concerne un moyen d'articulation entre deux pièces de liaison et un dispositif de liaison au sol pour roue de véhicule automobile, notamment pour roue directrice, comportant une pièce de liaison au porte-moyeu portant le moyeu de la roue du véhicule et une pièce de liaison à la biellette de direction ou au triangle de suspension, ces deux pièces de liaison étant articulées entre elles par ce moyen d'articulation.

Dans l'état de la technique connu, l'articulation de ces deux pièces se fait au moyen d'une rotule sphérique. Cette rotule présente un frottement, ce qui introduit une résistance au braquage dans la direction et provoque un surcroît de sollicitations élastiques dans la colonne de direction. Par ailleurs, une rotule sphérique n'assure aucun filtrage, ce qui peut contribuer à laisser remonter des vibrations dans le volant de direction.

Lorsque la liaison au sol est du type Mac Pherson, elle comporte une jambe de force montée entre le moyeu de la roue et la caisse du véhicule, et un ressort hélicoïdal monté entre une coupelle inférieure solidaire du corps de la jambe de force et une coupelle supérieure montée solidaire de la tige de la jambe de force.

Dans les liaisons au sol de type Mac Pherson pour roues directrices, une butée à billes est montée entre la coupelle supérieure et la chapelle de caisse du véhicule. Cette butée à billes présente également, lors du braquage de la direction, un seuil de résistance au roulement d'où résulte un seuil de couple indésirable pour la sensation au volant.

On connaît déjà, pour remplacer les rotules sphériques, un moyen d'articulation constitué d'un croisillon comportant deux arbres perpendiculaires entre eux définissant chacun un axe de rotation, chaque arbre étant porté par une pièce de liaison, avec interposition d'une bague élastique d'articulation apte à être sollicitée en torsion autour de l'axe de rotation de l'arbre associé. Toutefois, un tel moyen d'articulation présente un débattement angulaire limité par l'aptitude relativement faible de la bague élastique d'articulation à accepter des déformations sans subir de dommages ou sans opposer une trop grande résistance. Cela peut conduire à une détérioration des bagues élastiques d'articulation, notamment pour un angle de braquage important au niveau de la biellette de direction.

Le document EP-A-548 989 décrit un élément de liaison monté pivotant selon uniquement un axe vertical sur l'extrémité supérieure d'un moyeu de roue et monté pivotant selon uniquement un axe longitudinal du véhicule sur l'extrémité inférieure d'un dispositif d'amortissement.

Le document US-A-4 610 461 concerne un mécanisme de direction pour véhicule dans lequel un joint de cardant fixe a une première extrémité reliée à un arbre de direction et une deuxième extrémité attachée de manière pivotante à un écarteur supportant un moyeu de roue.

Le document DE-B-1 092 779 décrit un moyen d'articulation comportant deux arbres. Le premier arbre est constitué d'une portion médiane excentrique qui est montée dans un corps de palier par une liaison filetée et qui se prolonge axialement par deux bouts d'arbre montés sur un triangle par l'intermédiaire de manchons élastiques. Le deuxième arbre est monté dans le corps de palier par un manchon élastique et fixé par un tronc de cône dans une pièce de liaison reliée à un porte-roue.

Le document FR-A-2 568 329 divulgue un moyen d'articulation entre deux pièces de liaison conforme au préambule de la revendication 1.

L'invention a pour but de proposer un moyen d'articulation dont le débattement angulaire admissible est accru.

L'invention a aussi pour but de proposer un moyen d'articulation améliorant le confort acoustique, par exemple en diminuant les vibrations remontant au volant de direction, et en réduisant les points de contact avec la roue.

L'invention a encore pour but de perfectionner la technique connue, en supprimant le seuil de résistance au braquage et en fournissant un moyen d'articulation dont les déplacements angulaires sont sensiblement proportionnels aux efforts de maintien de la roue sur sa trajectoire.

A cet effet, l'invention a pour objet un moyen d'articulation entre deux pièces de liaison, conforme à la revendication 1.

Avantageusement, le moyen d'articulation comporte au moins une bague élastique d'articulation entre l'alésage précité et ledit premier arbre et au moins une bague élastique d'articulation séparée entre ledit premier arbre et la pièce de liaison qui le porte.

En ayant deux bagues élastiques séparées, l'une reliant la noix au premier arbre et l'autre reliant le premier arbre à la pièce de liaison, chacune des bagues travaille isolément et est sollicitée de manière homogène. Si on utilisait une seule bague élastique dont une partie est liée à la noix et une autre partie est liée à la pièce de liaison, dans la zone intermédiaire entre ces deux parties, la bague élastique subirait des contraintes importantes, car elle serait le siège de sollicitations ciconférentielles dans des sens opposés.

Dans un premier mode de réalisation, les deux axes de rotation précités sont concourants et la noix d'articulation comporte deux tourillons coaxiaux qui s'étendent de part et d'autre dudit alésage pour définir le second arbre du moyen d'articulation, ledit second arbre définissant le second axe de rotation, le débattement angulaire admissible de l'une quelconque des pièces de liaison autour dudit second axe de rotation résultant du débattement angulaire admissible de ladite pièce de liaison par rapport à la noix d'articulation. Dans ce cas, on obtient un débattement angulaire bien plus important autour du premier axe de rotation qu'autour du second axe de rotation, par exemple sensiblement de l'ordre du double. Toutefois, ce moyen d'articulation est particulièrement compact, grâce au fait que les axes de rotation sont concourants.

Dans un autre mode de réalisation, les deux axes de rotation précités ne sont pas concourants et la noix d'articulation est munie d'un second alésage pour le passage du second arbre avec interposition d'au moins une bague élastique d'articulation apte à être sollicitée en torsion autour du second axe de rotation associé audit second arbre, le premier alésage de la noix d'articulation n'ayant aucune intersection avec le second alésage.

Selon une autre caractéristique, chaque bague élastique d'articulation est constituée de deux parties tubulaires coaxiales entre lesquelles est moulé un matériau élastomère de faible module d'élasticité. De préférence, le matériau élastomère a une empreinte sur la partie tubulaire radialement intérieure plus longue que son empreinte sur la partie tubulaire radialement extérieure, de façon que la bague élastique présente une contrainte de cisaillement sensiblement constante, la bague élastique présentant une surface cylindrique sensiblement constante, quel que soit son rayon, grâce à la forme sensiblement trapézoïdale de ladite bague en section axiale.

Avantageusement, la bague élastique est choisie de façon à autoriser un débattement angulaire de l'ordre de ±20° par déformation en torsion de la bague élastique.

Avantageusement, chaque pièce de liaison présente une conformation en chape, les deux branches de chaque chape recevant, avec interposition d'au moins une bague élastique d'articulation, les extrémités d'un arbre de la noix d'articulation.

L'invention vise également un véhicule automobile équipé d'un dispositif de liaison au sol pour roue directrice, comportant un porte-moyeu de roue équipé du moyen d'articulation précité, caractérisé par le fait qu'une première pièce de liaison est solidaire du porte-moyeu de roue, alors que la deuxième pièce de liaison est solidaire d'une biellette de direction, le premier axe de rotation s'étendant sensiblement dans une direction verticale et le deuxième axe de rotation s'étendant sensiblement dans la direction longitudinale du véhicule.

L'invention a aussi pour objet un véhicule automobile équipé d'un dispositif de liaison au sol pour roue comportant un porte-moyeu de roue équipé du moyen d'articulation précité, caractérisé par le fait qu'une première pièce de liaison est solidaire du porte-moyeu de roue, alors que la deuxième pièce de liaison est solidaire d'un triangle de suspension lié à la caisse du véhicule, le premier axe de rotation s'étendant sensiblement dans une direction verticale et le deuxième axe de rotation s'étendant sensiblement dans la direction longitudinale du véhicule.

On peut prévoir que la noix d'articulation portée par la pièce de liaison au triangle soit montée dans cette pièce avec interposition de butées axiales, chaque butée axiale pouvant comporter une pluralité d'épaisseurs d'élastomère séparées par une pluralité d'anneaux intermédiaires en matériau non-élastomère ; dans ce cas, le matériau non-élastomère est avantageusement choisi dans le groupe formé par des feuilles ou clinquants métalliques, des tissus, des non-tissés, des matériaux thermoplastiques et des matériaux thermodurcissables. Les butées axiales peuvent être montées dans la pièce de liaison au triangle, de part et d'autre des épaulements de transition entre les tourillons et la partie centrale de la noix ; elles sont avantageusement montées avec une précontrainte sensiblement dans le sens longitudinal du véhicule ; chaque butée axiale est, de préférence, un ensemble lamifié d'élastomère contenant des séparations annulaires en matériau non-élastomère. Cette butée axiale est utile notamment lorsque l'invention est appliquée à l'articulation entre le porte-moyeu et le bras inférieur d'une suspension Mac Pherson. Une telle butée n'est cependant pas utile dans l'application de l'invention entre le porte-moyeu et la biellette de direction.

Dans une variante de réalisation, la liaison au sol est du type à double triangle de suspension dont le deuxième triangle de suspension est relié au porte-moyeu de roue par un moyen d'articulation conforme à l'invention.

Dans une autre variante de réalisation, la liaison au sol est du type Mac Pherson et comporte une jambe de force montée entre le porte-moyeu de la roue et la caisse du véhicule, et un ressort hélicoïdal monté entre une coupelle inférieure solidaire du corps de la jambe de force et une coupelle supérieure montée solidaire de la tige de la jambe de force, la coupelle supérieure étant solidaire d'un assemblage élastomère lamifié solidaire d'une pièce de fixation à la caisse du véhicule, de préférence à une chapelle de caisse du véhicule.

Dans le cas d'un tel dispositif de liaison au sol, la pièce de fixation à la caisse du véhicule peut être conformée en coupelle convexe ajustée à la surface intérieure de la chapelle de caisse ; la pièce de fixation à la caisse peut être réglable angulairement par rapport à ladite pièce ; l'extrémité supérieure du ressort hélicoïdal peut être indexée angulairement par insertion dans une partie de la coupelle supérieure, laquelle est avantageusement surmoulée par un matériau élastomère, au moins dans la zone d'appui du ressort.

Selon une première variante, la pièce de fixation à la caisse est montée pivotante par rapport à ladite caisse par l'intermédiaire d'un levier de réglage en rotation.

Selon une autre variante, la pièce de fixation et la caisse comportent chacune une pluralité d'orifices situés sur des cercles de même diamètre et espacés de manière à permettre une indexation angulaire lors de l'assemblage mécanique de la pièce de fixation à la caisse et de la caisse.

Selon une autre variante, la caisse comporte une pluralité de premières conformations et la pièce de fixation à la caisse une pluralité de deuxièmes conformations, et une première conformation de la caisse coopère avec une deuxième conformation de la pièce de fixation à la caisse, pour assurer une indexation entre caisse et pièce de fixation à la caisse.

Avantageusement, la pièce de fixation à la caisse présente une partie radialement intérieure coopérant avec une butée de détente pour empêcher le dégagement de la jambe de force en cas de décollage de la roue de véhicule avec rupture de l'assemblage élastomère lamifié ; la partie radialement intérieure peut être revêtue au moins partiellement ou surmoulée par un matériau amortisseur de choc.

On peut prévoir que la pièce de fixation à la caisse soit conformée pour s'encliqueter dans la caisse.

Grâce aux dispositions particulières qui viennent d'être décrites, on peut supprimer la butée à billes supérieure qui est habituellement présente dans une liaison au sol de type Mac Pherson et on peut la remplacer par un système élastique, dont le couple d'actionnement est sensiblement proportionnel à l'angle de pivotement. Un tel système élastique peut être réalisé sous forme modulaire, de manière à permettre un assemblage en usine d'un ensemble modulaire interchangeable comprenant une jambe de force et un ressort associé ; ce système permet aussi un pré-réglage en torsion de cet ensemble interchangeable, après assemblage à la caisse du véhicule, pour assurer la compensation d'un effort latéral ou d'un couple éventuels dus au pneumatique et aux conditions de roulage (dévers).

L'invention vise également un dispositif de liaison au sol caractérisé par le fait que le porte-moyeu de roue est relié par deux moyens d'articulation respectivement à la biellette de direction et au triangle de suspension, comme mentionné ci-dessus.

Pour mieux faire comprendre l'objet de l'invention, on va en décrire maintenant à titre d'exemple illustratif et non limitatif, plusieurs modes de réalisation en se référant au dessin annexé.

Sur ce dessin :
- la figure 1 représente schématiquement une vue en perspective avec coupes partielles d'un dispositif selon l'invention remplaçant une rotule de l'état de la technique au niveau de l'articulation entre la pièce de liaison au porte-moyeu de roue et la pièce de liaison au triangle de suspension d'un système de liaison au sol ;
- la figure 2 représente schématiquement une vue en coupe selon le plan vertical passant par la ligne II-II de la figure 1 ;
- la figure 3 représente schématiquement une vue éclatée en perspective de l'articulation selon les figures 1 et 2 ;
- la figure 4 représente schématiquement une vue générale, en élévation verticale avec coupe partielle, d'un dispositif de liaison au sol selon l'invention ;
- la figure 5 représente schématiquement une vue partielle en coupe agrandie de la partie supérieure du dispositif de liaison au sol de la figure 4 ;
- la figure 6 représente schématiquement une vue agrandie en coupe selon la ligne VI-VI de la figure 7 d'une variante de réalisation du dispositif de la figure 5 ;
- la figure 7 représente schématiquement une vue de dessus du dispositif de la figure 6 ;
- la figure 8 représente schématiquement une demi-vue en coupe selon la ligne VIII-VIII de la figure 9 d'une autre variante de réalisation du dispositif de la figure 5 ;
- la figure 9 représente schématiquement une demi-vue de dessus du dispositif de la figure 8 ;
- la figure 10 représente schématiquement une demi-vue en coupe d'une autre variante de réalisation du dispositif de la figure 5 ;
- la figure 11 représente schématiquement une demi-vue en coupe d'une dernière variante de réalisation du dispositif de la figure 5 ;
- la figure 12 est une vue partielle et en perspective d'un dispositif de liaison au sol conforme à l'invention pour une roue directrice avant de véhicule automobile, montrant les moyens d'articulation entre, d'une part, un porte-moyeu de roue, et d'autre part, une biellette de direction et un triangle de suspension, vu de l'intérieur et de dessous ; et
- la figure 13 est une vue partielle et en perspective du dispositif de liaison au sol de la figure 12, vu de l'extérieur et de dessus.

En se référant au dessin, on constatera que l'on a adopté des chiffres de référence identiques pour des éléments des différentes variantes qui sont identiques ou fonctionnellement équivalents.

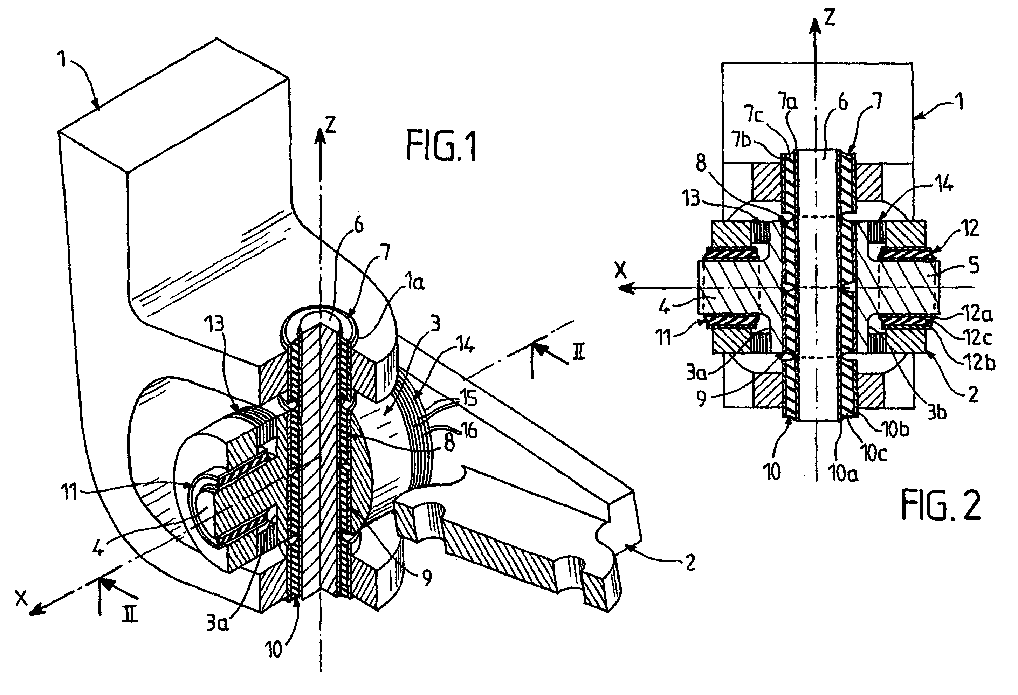

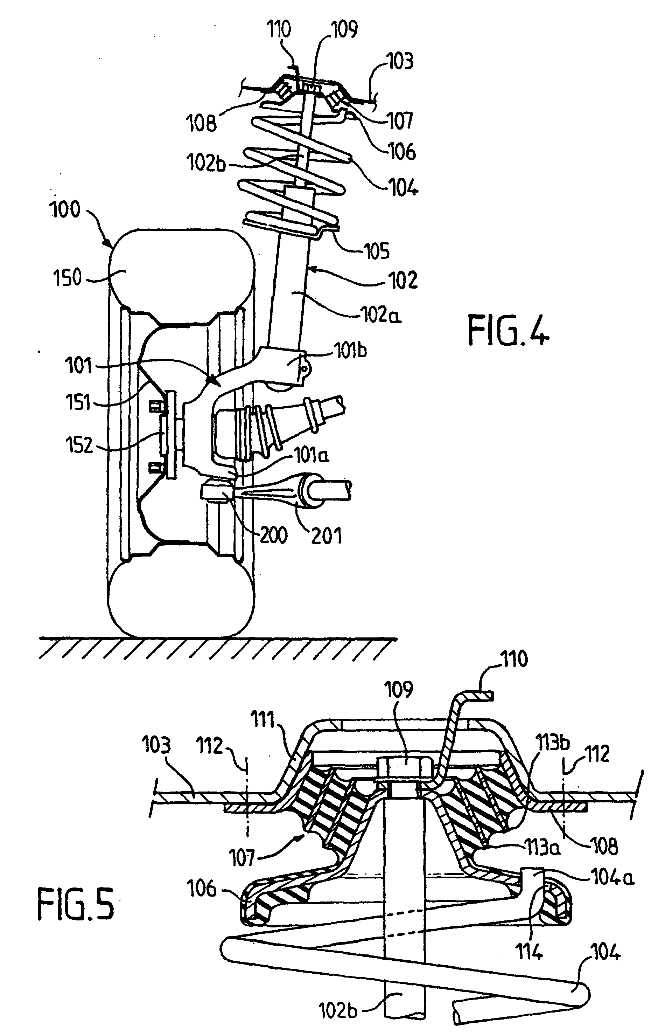

Sur la figure 4, on a représenté une liaison au sol de type Mac Pherson dans laquelle un ensemble de roue 100 comportant un bandage pneumatique 150 monté sur une jante 151 est disposé sur le moyeu 152 d'un porte-moyeu de roue 101 de véhicule automobile. Une jambe de force 102 est montée entre un bras supérieur 101b du porte-moyeu 101 et la caisse 103 du véhicule. Un ressort hélicoïdal 104 est monté entre une coupelle inférieure 105 solidaire du corps 102a de la jambe de force 102 et une coupelle supérieure 106 montée solidaire de la tige 102b de la jambe de force 102. Le porte-moyeu de roue 101 est relié par un bras inférieur 101a à un triangle de suspension 201 du véhicule par une articulation 200 dont le détail est représenté sur les figures 1 à 3.

Sur les figures 1 à 3, on voit qu'une chape 1 de liaison au porte-moyeu portant la roue du véhicule est articulée avec une chape de liaison 2 au triangle de suspension. On notera que la chape 1 peut être réalisée monobloc avec le bras 101a du porte-moyeu 101 et la chape 2 peut aussi être monobloc avec le triangle de suspension 201.

La chape de liaison 2 au triangle de suspension porte une noix 3 à deux bouts d'axe 4 et 5. La noix 3 comporte un alésage 6a traversé par un axe 6 d'articulation porté par la chape 1 de liaison au porte-moyeu.

Selon l'invention, des bagues élastiques d'articulation 7 à 12 sont interposées entre les axes d'articulation 4, 5 et 6 et les chapes correspondantes 1 et 2.

Chaque bague élastique d'articulation 7 à 12 se présente sous la forme de deux parties tubulaires 7a à 12a, 7b à 12b reliées l'une à l'autre par un élastomère 7c à 12c de faible dureté inférieure à 50 degrés Shore A. De préférence, chaque bague élastique 7 à 12 est réalisée par moulage d'élastomère directement entre les parties tubulaires 7a à 12a, 7b à 12b.

Le fait de choisir un matériau élastomère de faible module d'élasticité permet d'obtenir un grand débattement angulaire sans nécessiter un effort notable : ainsi, autour de l'axe X correspondant à une rotation autour des bouts d'axe 4 et 5, on obtient un débattement angulaire de l'ordre de ± 20° d'angle dans un sens ou dans l'autre à partir d'une position moyenne tandis que, autour de l'axe Z correspondant à une rotation autour de l'axe d'articulation 6, on obtient un débattement angulaire de l'ordre de 50° d'angle dans un sens ou dans l'autre par rapport à une position moyenne. Le fait que la rotation admissible autour de l'axe Z soit supérieure au double de la rotation admissible autour de l'axe X résulte de l'addition des angles admissibles aux bagues élastiques 7 et 10 d'extrémité et des rotations admissibles aux bagues 8 et 9 intermédiaires montées dans la noix 3.

Etant donné que les bagues 8 et 9 sont soumises aux mêmes sollicitations résultant de l'articulation relative de la noix 3 autour de l'axe 6, il est possible, sans sortir du cadre de la présente invention, de remplacer les deux bagues 8 et 9 par une bague unique de longueur double.

De préférence, les parties tubulaires 7a à 12a radialement intérieures sont d'une longueur supérieure à celle des parties tubulaires 7b à 12b radialement extérieures. Cette disposition assure un contact de plus grande longueur avec les axes d'articulation 4 à 6 et protège les matériaux élastomères intermédiaires 7c à 12c.

Le dispositif selon l'invention est monté sur le véhicule de manière que l'axe X, axe correspondant à la direction des bouts d'axe 4 et 5, soit sensiblement parallèle à l'axe longitudinal du véhicule dans le sens de marche.

Des efforts importants de freinage ou d'accélération sont, par conséquent, reportés sur la noix 3 par le déplacement de la chape 2 au cours du déplacement du véhicule. Pour équilibrer ces efforts, des butées axiales 13 et 14 sont interposées entre les branches de la chape 2 et la noix 3 d'articulation traversée par l'axe 6 d'articulation. Chaque butée axiale 13 ou 14 comporté, de préférence, une pluralité d'épaisseurs élastomères 15 séparées par une pluralité d'anneaux 16 intermédiaires en matériau non-élastomère.

De préférence, le matériau non-élastomère est un matériau présentant une bonne résistance au cisaillement ou à la torsion, choisi dans un groupe comprenant notamment les feuilles ou clinquants métalliques, les tissus, les non-tissés, les matériaux thermoplastiques et les matériaux thermodurcissables. L'essentiel est que le matériau non-élastomère présente une bonne compatibilité avec le matériau élastomère 15 pour faciliter un accrochage relatif et une solidarisation de l'ensemble.

De préférence, les butées axiales sont des ensembles lamifiés d'un seul tenant, par un moulage d'élastomère entre les anneaux intermédiaires 16 ou formés d'un empilage de rondelles caoutchoutées. Le montage de ces ensembles s'effectue, de préférence, sous une précontrainte axiale de 5 000 N dans le sens de l'axe X. A cet effet, on prévoit d'appuyer les butées axiales 13 et 14 de part et d'autre des épaulements 3a, 3b de transition entre les bouts d'axe 4 et 5 et la partie centrale de la noix 3.

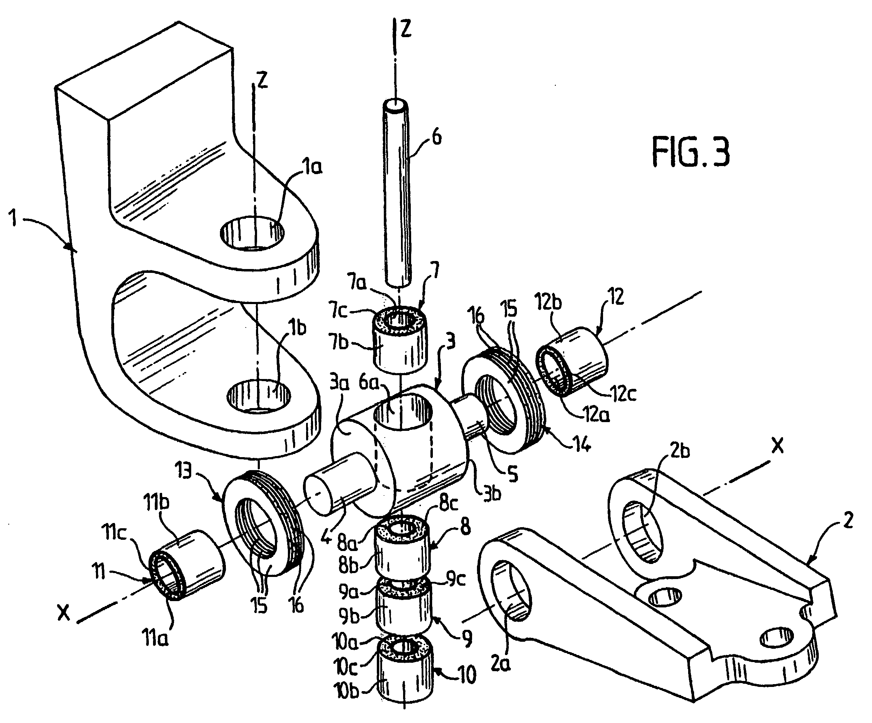

Sur la figure 3, le dispositif est représenté en perspective éclatée et démontée. Le montage du dispositif est effectué pour que les axes parallèles X soient alignés ainsi que les axes parallèles Z après montage.

La chape 1 de liaison au porte-moyeu comporte deux oeillets 1a 1b recevant les extrémités de l'axe 6 avec interposition des bagues élastiques 7 à 10. L'immobilisation des parties tubulaires 7b, 10b par rapport aux oeillets 1a, 1b s'obtient de manière connue par emmanchement à force. Il en est de même de l'immobilisation des parties radialement intérieures 7a à 12a sur chacun des axes d'articulation 4 à 6 correspondants.

La chape de liaison 2 au triangle de suspension est représentée en une seule pièce. Sans sortir du cadre de la présente invention, il est également possible de constituer cette chape 2 par assemblage de plusieurs éléments distincts, l'essentiel étant que les oeillets 2a, 2b alignés suivant l'axe X soient aptes à recevoir les bouts d'axe 4 et 5 avec interposition des bagues élastiques 11 et 12. L'assemblage mécanique de ces bagues élastiques ainsi que la précontrainte des butées axiales 13 et 14 sont également effectués de manière connue et ne nécessitent pas de description plus détaillée.

L'invention décrite en référence à un mode de réalisation particulier couvre également toutes variantes de réalisation et toutes modifications d'un dispositif comportant trois degrés de liberté de rotation. On remarquera qu'un degré de liberté de faible amplitude peut aussi être observé sur l'articulation proposée par la présente invention. Ainsi, le moyen d'articulation peut comporter trois degrés de liberté de rotation à la manière d'une rotule sphérique, deux degrés de liberté étant définis autour des deux axes de rotation précités, le troisième degré de liberté étant de faible amplitude et défini par le basculement autour d'un axe perpendiculaire aux deux axes de rotation précités, par sollicitation en traction et en compression des bagues élastiques d'articulation.

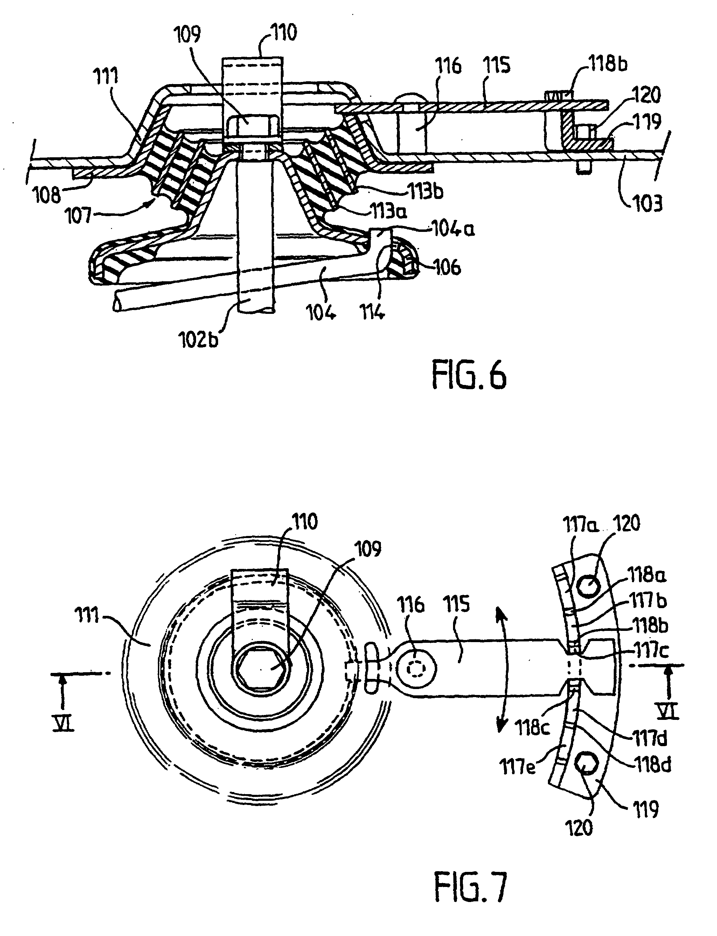

En se référant maintenant plus particulièrement à la figure 5, on voit qu'à la partie supérieure de la jambe de force 102, la coupelle supérieure 106 est solidaire d'un assemblage élastomère 107 lamifié, lui-même solidaire d'une pièce 108 de fixation à la caisse 103 du véhicule.

De manière connue, l'écrou 109 de fixation de la tige 102b de la jambe de force à la coupelle supérieure 106 maintient également une butée 110 de détente empêchant le dégagement de la jambe de force en cas de décollage de la roue de véhicule avec rupture de l'assemblage élastomère lamifié 107.

La caisse 103 du véhicule est conformée de manière à présenter une chapelle de caisse 111. La pièce 108 de fixation à la caisse 103 du véhicule est avantageusement conformée en coupelle convexe ajustée à la surface intérieure de la chapelle 111 de caisse. La fixation de la pièce 108 à la caisse 103 est effectuée par assemblage mécanique, boulonnage ou vissage schématisé par les traits d'axe 112. L'assemblage 107 élastomère lamifié est constitué essentiellement par moulage d'élastomère présentant une faible résistance à la torsion avec interposition de troncs de cône métallique 113a, 113b d'épaisseur faible entre les couches d'élastomère.

L'ensemble lamifié obtenu par surmoulage d'élastomère de dureté inférieure à 50 degrés Shore présente une faible résistance à la torsion sur une grande plage de braquage angulaire. L'effet de la lamification de cet ensemble est d'obtenir l'addition des angles de torsion de chaque tronc de cône élastomère interposé entre la coupelle supérieure 106, le premier tronc de cône 113a, le deuxième tronc de cône 113b, et la coupelle convexe 108.

Avantageusement, on prévoit un surmoulage de la coupelle supérieure 106 au moins au voisinage de l'orifice 114 d'engagement de l'extrémité 104a du ressort 104 dans la coupelle 106. Ce surmoulage au moins local permet d'éviter les bruits de choc tout en fixant l'extrémité 104a du ressort hélicoïdal 104 pour assurer son indexation angulaire. Pour éviter des reprises inutiles de surmoulage, on effectue de préférence le surmoulage en une seule opération, ce qui conduit à surmouler également la surface supérieure de la coupelle 106 et la majeure partie de son évasement intérieur.

L'invention décrite en référence à des parties tronconiques 113a, 113b en métal n'est nullement limitée à ce matériau, mais s'étend à d'autres matériaux aptes à être surmoulés et présentant une caractéristique en torsion plus raide que l'élastomère de surmoulage : on peut notamment citer tous les textiles, les non-tissés, les matériaux thermoplastiques ou thermo-durcissables aptes à être surmoulés. L'essentiel est de séparer les zones déformables angulairement constituées par les parties surmoulées en élastomère et les zones présentant une rigidité à la torsion constituée par les troncs de cône 113a, 113b intermédiaires.

Sur les figures 6 et 7, on a défini une variante de réalisation de l'articulation de la figure 5. Dans cette variante, la pièce 108 de fixation à la caisse est réglable angulairement par rapport à la chapelle 111 de la caisse 103. A cet effet, un levier 115 engagé dans un créneau à l'extrémité supérieure de la pièce 108 est monté sur un axe 116 solidaire de la caisse 103 ; on peut prévoir d'interposer un matériau antifriction entre la pièce 108 et la chapelle 111. L'extrémité du levier 115 opposée à l'extrémité soudée à la pièce 108 est conformée pour s'engager dans des évidements 117a à 117e séparés par des crans de réglage 118a à 118d. Les évidements 117 et les crans 118 sont pratiqués dans une pièce 119, par exemple, une cornière formée en arc de cercle, fixée à la caisse 103 par assemblage mécanique (boulonnage, vissage, soudage par points, etc...).

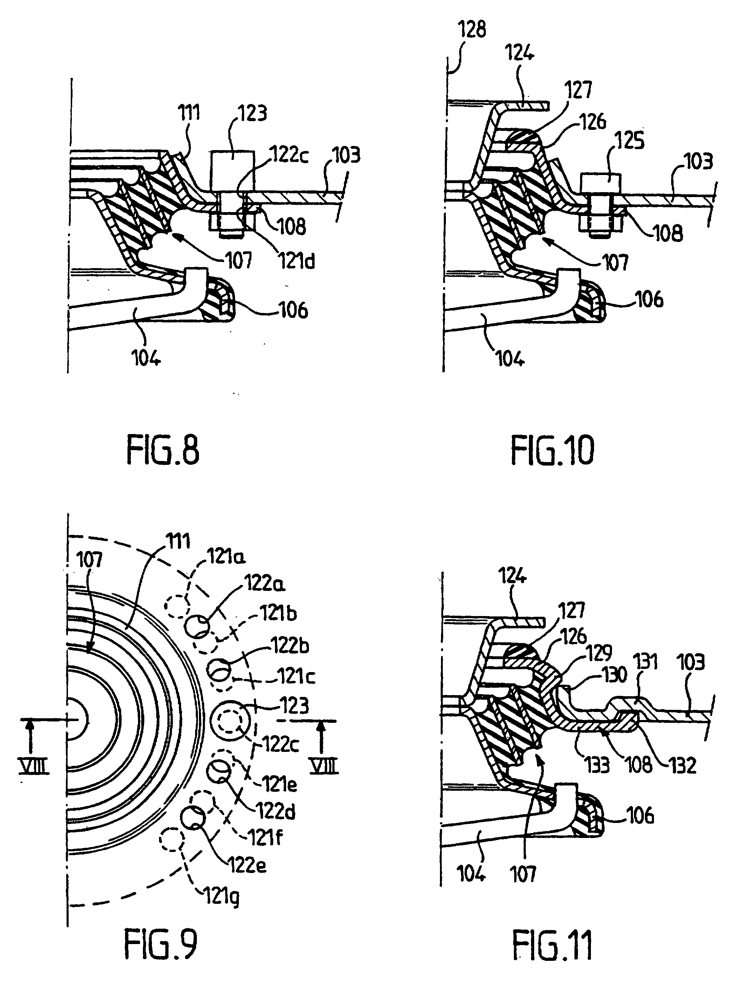

Sur les figures 8 et 9, on a représenté une autre variante de réalisation de l'articulation de la figure 5. Dans cette variante, la pièce 108 de fixation à la chapelle 111 de la caisse 103 comporte une pluralité d'orifices 121a à 121g. La caisse 103 comporte au voisinage de la chapelle 111 une pluralité d'orifices 122a à 122e situés sensiblement sur le même diamètre que les orifices 121a à 121g. Les orifices 121 sont régulièrement espacés selon un pas différent du pas d'espacement régulier des orifices 122. Le réglage angulaire de la pièce de fixation 108 par rapport à la caisse 103 peut ainsi s'effectuer à la manière d'un vernier, de manière à réaliser une indexation angulaire précise de la pièce 108 de fixation par rapport à la caisse 103. Après avoir effectué ce réglage, on effectue l'assemblage mécanique de la pièce 108 à la chapelle 111 au moyen d'une vis ou d'un boulon 123 d'assemblage.

L'invention fournit ainsi un moyen de réglage en torsion de la liaison au sol, de manière à compenser au moins partiellement des efforts de tirage ou de dérive dus au pneumatique.

Sur la figure 10, on a représenté un mode de réalisation particulièrement avantageux du dispositif de la figure 5. Dans ce mode de réalisation, la coupelle supérieure 106 est assemblée au moyen de la tige de la jambe de force 104b et de l'écrou 109 (non représentés) à une butée de détente 124 présentant avantageusement une forme de révolution. La pièce 108 de fixation à la caisse 103 au moyen de l'assemblage mécanique 125 présente une partie 126 radialement intérieure qui coopère avec la butée 124 de rebond ou de détente pour empêcher le dégagement de la jambe de force en cas de décollage ou de soulèvement de roue de véhicule.

La partie 126 radialement intérieure est avantageusement revêtue ou au moins partiellement surmoulée par un matériau résistant aux chocs, par exemple un polyamide. Dans l'exemple représenté, le surmoulage 127 présente une forme annulaire sensiblement coaxiale à l'axe de révolution 128.

Ce mode avantageux de réalisation de l'invention permet la fabrication en usine de l'ensemble jambe de force comprenant la butée de détente 124, la partie radialement intérieure 126 de la pièce de fixation 108, l'ensemble lamifié 107, la coupelle supérieure 106, la jambe de force 102 et le ressort 104 monté sur la coupelle inférieure 105.

Sur la figure 11, on a représenté une variante de réalisation du dispositif de la figure 10. Dans cette variante, la pièce 108 de fixation présente un rebord annulaire 129 adapté pour s'encliqueter avec le rebord 130 de la caisse 103.

Pour assurer une indexation entre la caisse 103 et la pièce de fixation 108, la caisse 103 est pourvue d'une pluralité d'indentations 131 et la pièce 108 de fixation est munie d'une pluralité de bossages 132 monté sur des leviers flexibles 133. L'espacement des bossages 132 et des indentations 131 se fait selon un pas différent, de manière à assurer une indexation précise entre la caisse 103 et la pièce 108 de fixation par engagement d'un bossage 132 dans une indentation 131. Le réglage se fait à la manière d'un vernier, de manière analogue à ce qui a été décrit en se référant à la figure 9.

Bien entendu, l'invention s'étend à la coopération de toute conformation en creux avec une conformation en relief située respectivement sur la pièce 108 de fixation et sur la caisse 103.

L'invention n'est nullement limitée aux variantes de réalisation décrites ci-dessus, mais s'étend à tout dispositif comprenant un ressort et une jambe de force, comprenant un assemblage élastomère lamifié dont l'angle de rotation est sensiblement proportionnel aux couples appliqués sans présenter de seuil et présentant un agencement permettant la fabrication en usine d'un ensemble modulaire comprenant une jambe de force et un ressort associés, prêt à assembler directement à la caisse ou à la chapelle de caisse du véhicule.

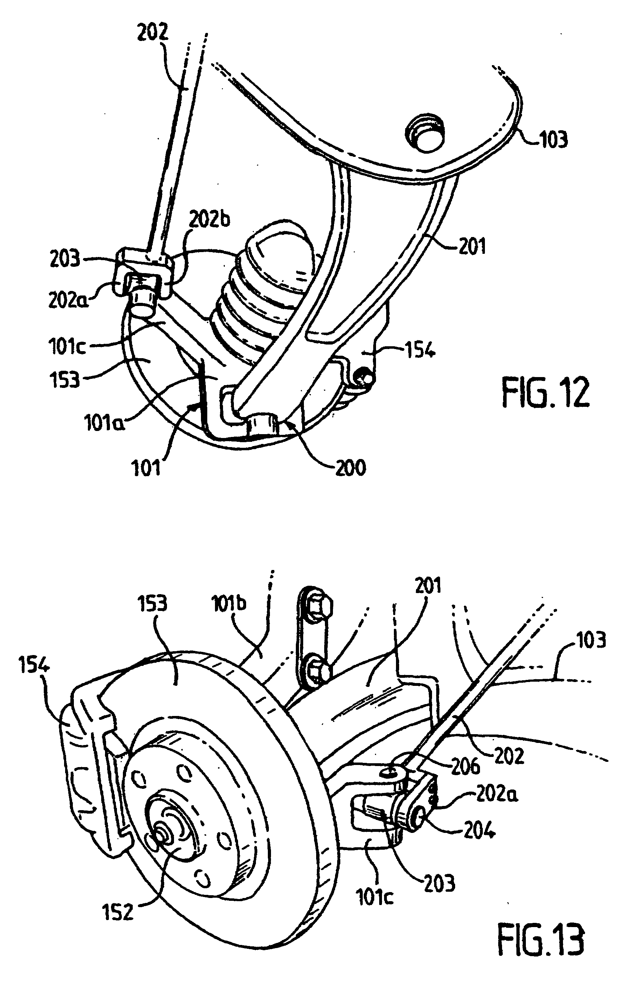

En se référant maintenant aux figures 12 et 13, on voit que le porte-moyeu de roue 101 est muni d'un disque de frein 153 qui est destiné à coopérer avec une mâchoire de freinage 154. Le porte-moyeu de roue 101 comporte un levier 101c qui est relié par un moyen d'articulation 203 conforme à l'invention à une biellette de direction 202 qui comporte à son extrémité une conformation en chape ayant deux branches parallèles 202a et 202b, à travers lesquelles sont montés les tourillons 204 de la noix d'articulation 203 du moyen d'articulation. Le levier 101c du porte-moyeu de roue 101 comporte également une chape pour recevoir entre ses branches le corps de la noix d'articulation 203 et à travers ses branches l'arbre de rotation 206. Le moyen d'articulation 203 est sensiblement analogue au moyen d'articulation 200 pour le triangle de suspension, à l'exception des butées axiales qui ne sont pas prévues au niveau de l'articulation avec la biellette de direction 202.

Bien entendu, l'invention n'est pas limitée à un moyen d'articulation comportant deux axes de rotation concourants, mais elle peut s'appliquer aussi à un moyen d'articulation comportant deux arbres de rotation décalés dont les axes ne sont pas concourants.

## Revendications

1. Moyen d'articulation (200, 203) entre deux pièces de liaison (1, 2), ledit moyen d'articulation comportant une noix d'articulation (3) munie de deux arbres (4 à 6) non parallèles définissant chacun un axe de rotation et d'au moins un alésage (6a) pour le passage d'un premier (6) desdits arbres avec interposition d'au moins une bague élastique d'articulation (8, 9) apte à être sollicitée en torsion autour de l'axe de rotation dit premier axe de rotation dudit premier arbre (6), **caractérisé par le fait que** lesdits arbres sont portés respectivement par les deux pièces de liaison, avec interposition de bagues élastiques d'articulation (7, 10 à 12) aptes à être sollicitées en torsion autour de l'axe de rotation de l'arbre associé, de façon que le débattement angulaire admissible relatif entre les pièces de liaison autour dudit premier axe de rotation résulte de l'addition du débattement angulaire admissible de ladite pièce de liaison par rapport audit premier arbre et du débattement angulaire admissible dudit premier arbre par rapport à la noix d'articulation (3).

2. Moyen d'articulation selon la revendication 1, **caractérisé par le fait qu'**il comporte au moins une bague élastique d'articulation (8, 9) entre l'alésage précité (6a) et ledit premier arbre (6) et au moins une bague élastique d'articulation séparée (7, 10) entre ledit premier arbre et la pièce de liaison (1) qui le porte.

3. Moyen d'articulation selon la revendication 1 ou 2, **caractérisé par le fait que** les deux axes de rotation précités sont concourants et que la noix d'articulation (3) comporte deux tourillons coaxiaux (4, 5) qui s'étendent de part et d'autre dudit alésage (6a) pour définir le second arbre du moyen d'articulation, ledit second arbre définissant le second axe de rotation, le débattement angulaire admissible de l'une quelconque des pièces de liaison autour dudit second axe de rotation résultant du débattement angulaire admissible de ladite pièce de liaison par rapport à la noix d'articulation (3).

4. Moyen d'articulation selon la revendication 1 ou 2, **caractérisé par le fait que** les deux axes de rotation précités ne sont pas concourants et que la noix d'articulation est munie d'un second alésage pour le passage du second arbre avec interposition d'au moins une bague élastique d'articulation apte à être sollicitée en torsion autour du second axe de rotation associé audit second arbre, le premier alésage de la noix d'articulation (3) n'ayant aucune intersection avec le second alésage.

5. Moyen d'articulation selon l'une des revendications 1 à 4, **caractérisé par le fait que** chaque bague élastique d'articulation (7 à 12) est constituée de deux parties tubulaires coaxiales (7a à 12a, 7b à 12b) entre lesquelles est moulé un matériau élastomère de faible module d'élasticité (7c à 12c).

6. Moyen d'articulation selon la revendication 4, **caractérisé par le fait que** le matériau élastomère (7c à 12c) a une empreinte sur la partie tubulaire radialement intérieure (7a à 12a) plus longue que son empreinte sur la partie tubulaire radialement extérieure (7b à 12b), de façon que la bague élastique présente une contrainte de cisaillement sensiblement constante, la bague élastique (7 à 12) présentant une surface cylindrique sensiblement constante, quel que soit son rayon, grâce à la forme sensiblement trapézoïdale de ladite bague en section axiale.

7. Moyen d'articulation selon l'une des revendications 1 à 6, **caractérisé par le fait que** la bague élastique est choisie de façon à autoriser un débattement angulaire de l'ordre de ±20° par déformation en torsion de la bague élastique.

8. Moyen d'articulation selon l'une des revendications 1 à 7, **caractérisé par le fait que** chaque pièce de liaison (1, 2) présente une conformation en chape, les deux branches (1a, 1b, 2a, 2b) de chaque chape recevant, avec interposition d'au moins une bague élastique d'articulation (7, 10 à 12), les extrémités d'un arbre (4 à 6) de la noix d'articulation (3).

9. Véhicule automobile équipé d'un dispositif de liaison au sol pour roue directrice (100), comportant un porte-moyeu de roue (101) équipé du moyen d'articulation selon l'une des revendications 1 à 8, **caractérisé par le fait qu'**une première pièce de liaison (1) est solidaire du porte-moyeu de roue (101), alors que la deuxième pièce de liaison (2) est solidaire d'une biellette de direction (202), le premier axe de rotation s'étendant sensiblement dans une direction verticale (Z) et le deuxième axe de rotation s'étendant sensiblement dans la direction longitudinale (X) du véhicule.

10. Véhicule automobile équipé d'un dispositif de liaison au sol pour roue (100), comportant un porte-moyeu de roue (101) équipé du moyen d'articulation selon l'une des revendications 1 à 8, **caractérisé par le fait qu'**une première pièce de liaison (1) est solidaire du porte-moyeu de roue (101), alors que la deuxième pièce de liaison (2) est solidaire d'un triangle de suspension (201) lié à la caisse (103) du véhicule, le premier axe de rotation s'étendant sensiblement dans une direction verticale (Z) et le deuxième axe de rotation s'étendant sensiblement dans la direction longitudinale (X) du véhicule.

11. Véhicule selon la revendication 10, **caractérisé par le fait que** la noix d'articulation (3) portée par la pièce (2) de liaison au triangle (201) est montée dans cette pièce (2) avec interposition de butées axiales (13, 14).

12. Véhicule selon la revendication 11, **caractérisé par le fait que** chaque butée axiale comporte une pluralité d'épaisseurs (15) d'élastomère séparées par une pluralité d'anneaux intermédiaires (16) en matériau non-élastomère.

13. Véhicule selon la revendication 12, **caractérisé par le fait que** le matériau (16) non-élastomère est choisi dans le groupe formé par les feuilles ou clinquants métalliques, les tissus, les non-tissés, les matériaux thermoplastiques et les matériaux thermodurcissables.

14. Véhicule selon l'une des revendications 11 à 13, **caractérisé par le fait que** les butées axiales (13, 14) sont montées dans la pièce (2) de liaison au triangle (201), de part et d'autre des épaulements (3a, 3b) de transition entre les tourillons (4, 5) et la partie centrale de la noix (3) du moyen d'articulation selon la revendication 2.

15. Véhicule selon l'une des revendications 11 à 14, **caractérisé par le fait que** les butées axiales (13, 14) sont montées avec une précontrainte sensiblement dans le sens longitudinal (X) du véhicule.

16. Véhicule selon l'une des revendications 11 à 15, **caractérisé par le fait que** chaque butée axiale (13 ou 14) est un ensemble lamifié d'élastomère (15) contenant des séparations annulaires (16) en matériau non-élastomère.

17. Véhicule selon l'une des revendications 10 à 16, **caractérisé par le fait que** la liaison au sol est du type Mac Pherson et comporte une jambe de force (102) montée entre le porte-moyeu (101) de la roue et la caisse (103) du véhicule, et un ressort (104) hélicoïdal monté entre une coupelle inférieure (105) solidaire du cylindre (102a) de la jambe de force (102) et une coupelle supérieure (106) montée solidaire de la tige (102b) de la jambe de force (102), la coupelle supérieure (106) étant solidaire d'un assemblage élastomère (107) lamifié solidaire d'une pièce (108) de fixation à la caisse du véhicule.

18. Véhicule selon la revendication 17, **caractérisé par le fait que** la pièce (108) de fixation à la caisse est réglable angulairement par rapport à la caisse (103).

19. Véhicule selon l'une des revendications 17 et 18, **caractérisé par le fait que** l'extrémité (104a) supérieure du ressort hélicoïdal (104) est indexée angulairement par insertion dans une partie de la coupelle (106) supérieure, ladite partie étant surmoulée par un matériau élastomère.

20. Véhicule selon les revendications 18 et 19 prises simultanément, **caractérisé par le fait que** la pièce (108) de fixation est montée pivotante par rapport à la caisse (103) par l'intermédiaire d'un levier (115) de réglage en rotation.

21. Véhicule selon les revendications 18 et 19 prises simultanément, **caractérisé par le fait que** la pièce (108) de fixation et la caisse (103) comportent chacune une pluralité d'orifices (121, 122) situés sur un même diamètre et espacés de manière à permettre une indexation angulaire lors de l'assemblage mécanique (123) de la pièce (108) de fixation à la caisse et de la caisse (103).

22. Véhicule selon l'une des revendications 17 à 21, **caractérisé par le fait que** la pièce (108) de fixation à la caisse présente une partie (126) radialement intérieure coopérant avec une butée (124) de détente pour empêcher le dégagement de la jambe de force en cas de décollage de la roue de véhicule et de rupture de l'assemblage élastomère lamifié (107).

23. Véhicule selon les revendications 18 et 19 prises simultanément, **caractérisé par le fait que** la caisse (103) comporte une pluralité de premières conformations (131) et la pièce (108) de fixation à la caisse une pluralité de deuxièmes conformations (132), et **par le fait que**, pour assurer une indexation entre caisse (103) et pièce (108) de fixation à la caisse, une première conformation (131) de la caisse (103) coopère avec une deuxième conformation (132) de la pièce (108) de fixation à la caisse.

## Patentansprüche

1. Gelenkmittel (200, 203) zwischen zwei Verbindungsteilen (1, 2) mit einer Gelenknuss (3), die zwei nicht parallele Wellen (4 bis 6), die jeweils eine Drehachse festlegen, und mindestens eine Bohrung (6a) für den Durchgang der ersten (6) der beiden Wellen aufweist, wobei mindestens ein elastischer Gelenkring (8, 9) zwischengeschaltet ist, der um die erste Drehachse genannte Drehachse der ersten Welle (6) drehbeansprucht werden kann,
**dadurch gekennzeichnet, dass** die Wellen jeweils von einem der beiden Verbindungsteile getragen werden, wobei elastische Gelenkringe (7, 10 bis 12) zwischengeschaltet sind, die um die Drehachse der zugehörigen Welle drehbeansprucht werden können, sodass sich die zulässige relative Winkelbewegung zwischen den Verbindungsteilen um die erste Drehachse aus der Addition der zulässigen Winkelbewegung des Verbindungsteils bezüglich der ersten Achse mit der zulässigen Winkelbewegung der ersten Welle bezüglich der Gelenknuss (3) ergibt.

2. Gelenkmittel nach Anspruch 1, **dadurch gekennzeichnet, dass** es mindestens einen elastischen Gelenkring (8, 9) zwischen der zuvor genannten Bohrung (6a) und der ersten Welle (6) und mindestens einen getrennten elastischen Gelenkring (7, 10) zwischen der ersten Welle und dem Verbindungsteil (1) aufweist, von dem die Welle getragen wird.

3. Gelenkmittel nach Anspruch 1 oder 2, **dadurch gekennzeichnet, dass** sich die beiden zuvor genannten Drehachsen kreuzen und die Gelenknuss (3) zwei koaxiale Zapfen (4, 5) aufweist, die sich zu beiden Seiten der Bohrung (6a) erstrecken und die zweite Welle des Gelenkmittels festlegen, die die zweite Drehachse festlegt, wobei sich die zulässige Winkelbewegung eines jeden Verbindungsteils um die zweite Drehachse aus der zulässigen Winkelbewegung des Verbindungsteils bezüglich der Gelenknuss (3) ergibt.

4. Gelenkmittel nach Anspruch 1 oder 2, **dadurch gekennzeichnet, dass** sich die beiden zuvor genannten Drehachsen nicht kreuzen und dass die Gelenknuss mit einer zweiten Bohrung für den Durchgang der zweiten Welle versehen ist, wobei mindestens ein elastischer Gelenkring zwischengeschaltet ist, der um die zweite Drehachse, die der zweiten Welle zugeordnet ist, drehbeansprucht werden kann und die erste Bohrung der Gelenknuss (3) keinen Schnittpunkt mit der zweiten Bohrung aufweist.

5. Gelenkmittel nach einem der Ansprüche 1 bis 4, **dadurch gekennzeichnet, dass** jeder elastische Gelenkring (7 bis 12) aus zwei koaxialen rohrförmigen Teilen (7a bis 12a, 7b bis 12b) besteht, zwischen denen Elastomermasse (7c bis 12c) mit geringem Elastizitätsmodul vergossen ist.

6. Gelenkmittel nach Anspruch 4, **dadurch gekennzeichnet, dass** die Elastomermasse (7c bis 12c) einen Andruck am radial inneren rohrförmigen Teil (7a bis 12a) aufweist, der länger ist als ihr Andruck am radial äußeren rohrförmigen Teil (7b bis 12b), sodass der elastische Ring eine im Wesentlichen konstante Scherspannung aufweist, wobei der elastische Ring (7 bis 12) unabhängig von seinem Radius dank der im Wesentlichen trapezoiden Form des Rings im axialen Querschnitt eine im Wesentlichen konstante Zylinderfläche aufweist.

7. Gelenkmittel nach einem der Ansprüche 1 bis 6, **dadurch gekennzeichnet, dass** der elastische Ring so gewählt wird, dass er eine Winkelbewegung in der Größenordnung von ± 20° durch Torsionsverformung des elastischen Rings erlaubt.

8. Gelenkmittel nach einem der Ansprüche 1 bis 7, **dadurch gekennzeichnet, dass** jedes Verbindungsteil (1, 2) als Gabel geformt ist, wobei die beiden Arme (1a, 1b, 2a, 2b) jeder Gabel unter Zwischenschaltung von mindestens einem elastischen Gelenkring (7, 10 bis 12) die Enden einer Welle (4 bis 6) der Gelenknuss (3) aufnehmen.

9. Kraftfahrzeug, das mit einer Vorrichtung zur Verbindung eines Vorderrads (100) mit dem Boden ausgestattet ist, mit einem Achsschenkel (101), der mit dem Gelenkmittel nach einem der Ansprüche 1 bis 8 versehen ist, **dadurch gekennzeichnet, dass** ein erstes Verbindungsteil (1) mit dem Achsschenkel (101) fest verbunden ist, während das zweite Verbindungsteil (2) mit einem Lenkarm (202) fest verbunden ist, wobei sich die erste Drehachse im Wesentlichen in einer vertikalen Richtung (Z) und die zweite Drehachse im Wesentlichen in Längsrichtung (X) des Fahrzeugs erstreckt.

10. Kraftfahrzeug, das mit einer Vorrichtung zur Verbindung eines Rads mit dem Boden (100) versehen ist, mit einem Achsschenkel (101), der mit dem Gelenkmittel nach einem der Ansprüche 1 bis 8 ausgestattet ist, **dadurch gekennzeichnet, dass** ein erstes Verbindungsteil (1) mit dem Achsschenkel (101) fest verbunden ist, während das zweite Verbindungsteil (2) mit einem Dreiecksquerlenker (201) fest verbunden ist, der mit dem Aufbau (103) des Fahrzeugs verbunden ist, wobei sich die erste Drehachse im Wesentlichen in einer vertikalen Richtung (Z) und die zweite Drehachse im Wesentlichen in Längsrichtung (X) des Fahrzeugs erstreckt.

11. Fahrzeug nach Anspruch 10, **dadurch gekennzeichnet, dass** die von dem Teil (2) zur Verbindung mit dem Dreiecksquerlenker (201) getragene Gelenknuss (3) an diesem Teil (2) unter Zwischenschaltung axialer Anschläge (13, 14) montiert ist.

12. Fahrzeug nach Anspruch 11, **dadurch gekennzeichnet, dass** jeder axiale Anschlag mehrere Elastomerschichten (15) aufweist, die mittels mehrerer Zwischenringe (16) aus nicht-elastomerem Material voneinander getrennt sind.

13. Fahrzeug nach Anspruch 12, **dadurch gekennzeichnet, dass** das nicht-elastomere Material (16) aus der Gruppe der Blattmetalle oder Metallfolien, der Textilien, der Faservliese, der Thermoplaste und der Duroplaste gewählt wird.

14. Fahrzeug nach einem der Ansprüche 11 bis 13, **dadurch gekennzeichnet, dass** die axialen Anschläge (13, 14) im Teil (2) zur Verbindung mit dem Dreiecksquerlenker (201) auf beiden Seiten von Schultern (3a, 3b) montiert sind, die einen Übergang zwischen den Zapfen (4, 5) und dem mittleren Abschnitt der Nuss (3) des Gelenkmittels nach Anspruch 2 bilden.

15. Fahrzeug nach einem der Ansprüche 11 bis 14, **dadurch gekennzeichnet, dass** die axialen Anschläge (13, 14) mit einer Vorspannung im Wesentlichen in Längsrichtung (X) des Fahrzeugs montiert werden.

16. Fahrzeug nach einem der Ansprüche 11 bis 15, **dadurch gekennzeichnet, dass** jeder axiale Anschlag (13 oder 14) eine Elastomerlaminat-Einheit (15) ist, die ringförmige Abtrennungen (16) aus nicht-elastomerem Material enthält.

17. Fahrzeug nach einem der Ansprüche 10 bis 16, **dadurch gekennzeichnet, dass** die Verbindung mit dem Boden vom Typ Mac Pherson ist und ein Federbein (102) aufweist, das zwischen dem Achsschenkel (101) und dem Aufbau (103) des Fahrzeugs montiert ist, sowie eine Schraubenfeder (104), die zwischen einem unteren, mit dem Zylinder (102a) des Federbeins (102) fest verbundenen Teller (105) und einem oberen Teller (106) montiert ist, welcher mit der Stange (102b) des Federbeins (102) fest verbunden ist, wobei der obere Teller (106) mit einer Elastomerlaminat-Einheit (107) fest verbunden ist, die wiederum mit einem Teil (108) zur Befestigung am Fahrzeugaufbau fest verbunden ist.

18. Fahrzeug nach Anspruch 17, **dadurch gekennzeichnet, dass** das Teil (108) zur Befestigung am Aufbau gegenüber dem Aufbau (103) winkelverstellbar ist.

19. Fahrzeug nach einem der Ansprüche 17 und 18, **dadurch gekennzeichnet, dass** das obere Ende (104a) der Schraubenfeder (104) winkelmäßig durch Einfügen in einen Abschnitt des oberen Tellers (106) umgebogen ist, wobei der Abschnitt von Elastomermasse überformt ist.

20. Fahrzeug nach den Ansprüchen 18 und 19, **dadurch gekennzeichnet, dass** das Befestigungsteil (108) gegenüber dem Aufbau (103) über einen Hebel (115) zur Dreheinstellung verschwenkbar befestigt ist.

21. Fahrzeug nach den Ansprüchen 18 und 19, **dadurch gekennzeichnet, dass** das Befestigungsteil (108) und der Aufbau (103) jeweils mehrere Öffnungen (121, 122) aufweisen, die auf dem gleichen Durchmesser gelegen und derart voneinander beabstandet sind, dass beim mechanischen Zusammenbau (123) des Teils (108) zur Befestigung am Aufbau und dem Aufbau (103) eine winkelmäßige Indizierung möglich ist.

22. Fahrzeug nach einem der Ansprüche 17 bis 21, **dadurch gekennzeichnet, dass** das Teil (108) zur Befestigung am Aufbau einen radial unteren Abschnitt (126) aufweist, der mit einem Auffanglager (124) zusammenwirkt, um das Lösen des Federbeins im Fall des Ablösens des Fahrzeugrads und des Reißens der Elastomerlaminat-Einheit (107) zu verhindern.

23. Fahrzeug nach einem der Ansprüche 18 und 19, **dadurch gekennzeichnet, dass** der Aufbau (103) mehrere erste Ausformungen (131) und das Teil (108) zur Befestigung am Aufbau mehrere zweite Ausformungen (132) aufweist, und dadurch, dass, um eine Indizierung zwischen dem Aufbau (103) und dem Teil (108) zur Befestigung am Aufbau sicherzustellen, eine erste Ausformung (131) des Aufbaus (103) mit einer zweiten Ausformung (132) des Teils (108) zur Befestigung am Aufbau zusammenwirkt.

## Claims

1. Articulating means (200, 203) between two connecting parts (1, 2), said articulating means comprising an articulating nut (3) which is provided with two non-parallel shafts (4 to 6), each of which defines an axis of rotation and at least one boring (6a) for the passage of a first of said shafts, with interposition of at least one elastic articulating ring (8, 9) which is suitable for being stressed by torsion about the axis of rotation of said first axis of rotation of said first shaft (6), **characterised by** the fact that said shafts are carried respectively by the two connecting parts, with interposition of elastic articulating rings (7, 10 to 12) which are suitable for being stressed by torsion about the axis of rotation of the associated shaft, so that the relative, permissible, angular clearance between the connecting parts about said first axis of rotation results from the addition of the permissible angular clearance of said connecting part relative to said first shaft and from the permissible angular clearance of said first shaft relative to the articulating nut (3).

2. Articulating means according to claim 1, **characterised by** the fact that it comprises at least one elastic articulating ring (8, 9) between the aforementioned boring (6a) and said first shaft (6) and at least one separate, elastic articulating ring (7, 10) between said first shaft and the connecting part (1) which carries it.

3. Articulating means according to claim 1 or 2, **characterised by** the fact that the two aforementioned axes of rotation are concurrent and that the articulating nut (3) comprises two coaxial bearing journals (4, 5) which extend on both sides of said boring (6a) in order to define the second shaft of the articulating means, said second shaft defining the second axis of rotation, the permissible angular clearance of any of the connecting parts about said second axis of rotation resulting from the permissible angular clearance of said connecting part relative to the articulating nut (3).

4. Articulating means according to claim 1 or 2, **characterised by** the fact that the two aforementioned axes of rotation are not concurrent and that the articulating nut is provided with a second boring for the passage of the second shaft with interposition of at least one elastic articulating ring which is suitable for being stressed by torsion about the second axis of rotation associated with said second shaft, the first boring of the articulating nut (3) having no intersection with the second boring.

5. Articulating means according to one of the claims 1 to 4, **characterised by** the fact that each elastic articulating ring (7 to 12) comprises two coaxial tubular portions (7a to 12a, 7b to 12b), between which an elastomer material (7c to 12c) with a low modulus of elasticity is moulded.

6. Articulating means according to claim 4, **characterised by** the fact that the elastomer material (7c to 12c) has a recess on the radially internal tubular portion (7a to 12a) which recess is longer than its recess on the radially external tubular portion (7b to 12b) so that the elastic ring presents a substantially constant shear stress, the elastic ring (7 to 12) presenting a substantially constant cylindrical surface whatever its radius, thanks to the substantially trapezoidal form of said ring in axial section.

7. Articulating means according to one of the claims 1 to 6, **characterised by** the fact that the elastic ring is chosen so as to permit an angular clearance of the order of ± 20° by deformation by torsion of the elastic ring.

8. Articulating means according to one of the claims 1 to 7, **characterised by** the fact that each connecting part (1, 2) presents a fork joint configuration, the two branches (1a, 1b, 2a, 2b) of each fork joint receiving, with the interposition of at least one elastic articulating ring (7, 10 to 12), the ends of a shaft (4 to 6) of the articulating nut (3).

9. Automotive vehicle equipped with a device for ground contact for the leading wheel (100), comprising a wheel hub carrier (101) which is equipped with the articulating means according to one of the claims 1 to 8, **characterised by** the fact that a first connecting part (1) is integral with the wheel hub carrier (101) whilst the second connection part (2) is integral with a steering rod (202), the first axis of rotation extending substantially in a vertical direction (Z) and the second axis of rotation extending substantially in the longitudinal direction (X) of the vehicle.

10. Automotive vehicle equipped with a device for ground contact for the wheel (100), comprising a wheel hub carrier (101) which is equipped with the articulating means according to one of the claims 1 to 8, **characterised by** the fact that a first connecting part (1) is integral with the wheel hub carrier (101) whilst the the second connecting part (2) is integral with a suspension triangle (201) which is connected to the body (103) of the vehicle, the first axis of rotation extending substantially in a vertical direction (Z) and the second axis of rotation extending substantially in the longitudinal direction (X) of the vehicle.

11. Vehicle according to claim 10, **characterised by** the fact that the articulating nut (3) which is carried by the connecting part (2) to the triangle (201) is mounted in this part (2) with interposition of axial limit stops (13, 14).

12. Vehicle according to claim 11, **characterised by** the fact that each axial limit stop comprises a plurality of thicknesses (15) of elastomer which are separated by a plurality of intermediate collars (16) made of non-elastomer material.

13. Vehicle according to claim 12, **characterised by** the fact that the non-elastomer material (16) is chosen from the group made up of foils or metal leaves, fabrics, non-woven fabrics, thermoplastic materials and duroplastic materials.

14. Vehicle according to one of the claims 11 to 13, **characterised by** the fact that the axial limit stops (13, 14) are mounted in the connecting part (2) to the triangle (201), on both sides of the transition shoulders (3a, 3b) between the bearing journals (4, 5) and the central portion of the nut (3) of the articulating means according to claim 2.

15. Vehicle according to one of the claims 11 to 14, **characterised by** the fact that the axial limit stops (13, 14) are mounted with a prestressing which is substantially in the longitudinal direction (X) of the vehicle.

16. Vehicle according to one of the claims 11 to 15, **characterised by** the fact that each axial limit stop (13 or 14) is a laminated elastomer assembly (15) containing annular separations (16) made of non-elastomer material.

17. Vehicle according to one of the claims 10 to 16, **characterised by** the fact that the ground contact is of the Macpherson type and comprises a strut (102) which is mounted between the wheel hub carrier (101) and the body (103) of the vehicle, and a helicoid spring (104) which is mounted between a lower spring plate (105) which is integral with the cylinder (102a) of the strut (102) and an upper spring plate (106) which is mounted integral with the rod (102b) of the strut (102), the upper spring plate (106) being integral with an elastomer assembly (107) which is laminated integrally with an attachment part (108) to the body of the vehicle.

18. Vehicle according to claim 17, **characterised by** the fact that the attachment part (108) to the body is angularly adjustable relative to the body (103).

19. Vehicle according to one of the claims 17 and 18, **characterised by** the fact that the upper end (104a) of the helicoid spring (104) is angularly indexed by insertion into a portion of the upper spring plate (106), said part being moulded-on by an elastomer material.

20. Vehicle according to claims 18 and 19 taken simultaneously, **characterised by** the fact that the attachment part (108) is mounted so as to pivot relative to the body (103) by means of a lever (115) for rotational adjustment.

21. Vehicle according to claims 18 and 19 taken simultaneously, **characterised by** the fact that the attachment part (108) and the body (103) each comprise a plurality of orifices (121, 122) which are situated on the same diameter and spaced so as to allow an angular indexation during mechanical assembly (123) of the attachment part (108) to the body and of the body (103).

22. Vehicle according to one of the claims 17 to 21, **characterised by** the fact that the attachment part (108) to the body presents a radially internal part (126) which co-operates with a detent limit stop (124) in order to prevent disengagement of the strut in the case of breakaway of the vehicle wheel and of rupture of the laminated elastomer assembly (107).

23. Vehicle according to claims 18 and 19 taken simultaneously, **characterised by** the fact that the body (103) comprises a plurality of first configurations (131) and the attachment part (108) to the body comprises a plurality of second configurations (132), and by the fact that, in order to ensure an indexation between body (103) and attachment part (108) to the body, a first configuration (131) of the body (103) co-operates with a second configuration (132) of the attachment part (108) to the body.
